# EUROPÄISCHE PATENTSCHRIFT

(11) **EP 3 306 057 B1**
(45) Veröffentlichungstag und Bekanntmachung des Hinweises auf die Patenterteilung: **21.08.2019**
(21) Anmeldenummer: 17193454.0
(22) Anmeldetag: 27.09.2017
(51) Int. Cl.: F02D 9/10, F02M 26/65, H02K 7/116

(54) **AKTUATOR ZUR VERSTELLUNG VON KLAPPEN FÜR EINE VERBRENNUNGSKRAFTMASCHINE**
ACTUATOR TO ACTUATE FLAPS FOR AN INTERNAL COMBUSTION ENGINE
ACTIONNEUR POUR ACTIONNER DES VOLETS POUR UN MOTEUR À COMBUSTION INTERNE

(30) Priorität: 07.10.2016 DE 102016119092
(43) Veröffentlichungstag der Anmeldung: 11.04.2018
(73) Patentinhaber: Pierburg GmbH, 41460 Neuss (DE)
(72) Erfinder: Nowak, Martin, 51379 Leverkusen (DE); Sanders, Michael, 41564 Kaarst (DE); Tönnesmann, Dr., Andres, 52066 Aachen (DE); von Scheven, Markus, 12045 Berlin (DE)
(74) Vertreter: Patentanwälte ter Smitten Eberlein-Van Hoof Rütten Partnerschaftsgesellschaft mbB

(56) Entgegenhaltungen:
- CN-A- 104 037 979
- US-A1- 2005 099 073
- US-A1- 2012 299 416
- US-B1- 6 310 455

## Beschreibung

Die vorliegende Erfindung betrifft eine Aktuator für eine Verbrennungskraftmaschine mit einem Elektromotor, welcher eine Antriebswelle antreibt, einer Elektronikeinheit, und einem Getriebe mit einem koaxial zur Antriebswelle angeordneten Abtriebszahnrad, wobei das Getriebe die Antriebswelle mit einer Abtriebswelle des Aktuators verbindet, wobei die Antriebswelle als Hohlwelle ausgebildet ist, in welcher die Abtriebswelle angeordnet ist.

Aktuatoren werden beispielsweise zur Verstellung von Klappen in Kraftfahrzeugen, wie bspw. Abgasklappen eingesetzt. Zur Verstellung solcher Klappen werden oft hohe Stellkräfte bzw. Momente benötigt. Zur Erzeugung solcher Stellkräfte bzw. Momente, wird ein Drehmoment eines Elektromotors, bspw. über ein Planetengetriebe untersetzt, auf eine Stellwelle übertragen.

Die US 6,310,455 B1 offenbart einen Aktuator mit einem Elektromotor, welcher einen Stator und einen mit einer Antriebswelle fest verbundenen permanentmagnetischen Rotor aufweist. Die Antriebswelle ist über zwei Lager an axialen Enden des Rotors in einem Gehäuse des Aktuators gelagert. Die Antriebswelle, welche als Hohlwelle ausgebildet ist, weist an einem freien, nicht gelagerten axialen Ende ein Sonnenrad eines Planetengetriebes auf. An einer Abtriebsseite des Planetengetriebes ist eine Abtriebswelle über ein Hohlrad mit dem Planetengetriebe verbunden. Um eine Position der Abtriebswelle an einer zentralen Elektronikeinheit messen zu können, ragt die Abtriebswelle in die als Hohlwelle ausgebildete Antriebswelle und ist über ein erstes Abtriebswellenlager, welches radial innenliegend zu der Antriebswellenlagerung zwischen der Antriebswelle und Abtriebswelle angeordnet ist, und einem zweiten Abtriebswellenlager, welches an einem axialen Ende des Gehäuses zwischen Abtriebswelle und einem abnehmbaren Gehäusedeckel angeordnet ist, gelagert.

Die US 2005/0099073 A1 offenbart einen Riementrieb, dessen antreibender Elektromotor eine als Hohlwelle ausgebildete Antriebswelle aufweist, die an der Frontseite im Gehäuse gelagert ist und an der Rückseite auf einer in der Hohlwelle angeordneten Abtriebswelle. Diese wird über den rückgeführten Riementrieb übersetzt zur Antriebswelle angetrieben und ist an ihrer Rückseite im Gehäuse gelagert und an ihrer Frontseite in der Hohlwelle.

Die US 2012/0299416 A1 offenbart einen Elektromotor mit hohem Drehmoment und einem Planetengetriebe. Dabei ist eine Antriebsbuchse einerseits im Gehäuse und andererseits auf der Abtriebswelle gelagert, die über das Planetengetriebe angetrieben wird. Die Abtriebswelle ist ihrerseits an der ersten Seite im Gehäuse gelagert und an der anderen Seite über einen mit der Abtriebswelle verbundenen Planetenradträger im Gehäuse gelagert.

In der CN 104037979 A ist eine Schraubenpumpe offenbart, deren Antriebsmotor eine Hohlwelle antreibt. Diese Hohlwelle ist auf der innenliegenden Abtriebswelle und über an der Abtriebswelle befestigte Zahnräder im Gehäuse gelagert. Die Abtriebswelle ist auf einem inneren Rohr sowie ebenfalls über ein Zahnrad im Gehäuse gelagert.

Bei dem Aktuator nach dem Stand der Technik besteht das Problem, dass genaue Fertigungstoleranzen bei der Herstellung des Aktuators notwendig sind, um ein hohes Maß an Koaxialität der Antriebswelle zur Abtriebswelle zu erzielen. Die Herstellung des Aktuators wird dadurch erschwert. Dies führt zu hohen Produktionskosten des Aktuators. Ein hohes Maß an Koaxialität ist wichtig, da bei nicht koaxialen Wellen das Planetengetriebe einem erhöhten Verschleiß ausgesetzt ist.

Die Aufgabe der vorliegenden Erfindung liegt somit darin, einen Aktuator für eine Verbrennungskraftmaschine zu schaffen, bei welchem eine Position der Abtriebswelle an einer zentralen Elektronikeinheit messbar ist, welcher zudem einfach herzustellen ist, und bei welchem trotz alledem ein geringer Verschleiß auftritt.

Diese Aufgabe wird durch einen Aktuator zur Verstellung von Klappen für eine Verbrennungskraftmaschine mit den Merkmalen des Anspruchs 1 gelöst. Bei dem erfindungsgemäßen Aktuator ist die Antriebswelle als Hohlwelle ausgebildet, in welcher die Abtriebswelle angeordnet ist, wobei die Abtriebswelle in einem Gehäuse des Aktuators gelagert ist und die Antriebswelle über die Abtriebswelle gelagert ist. Die Hohlwelle ist somit hohlzylindrisch ausgebildet, so dass diese die Abtriebswelle innerhalb aufnehmen kann. Das Ende der Abtriebswelle kann so bis an eine zentrale Elektronikeinheit geführt werden, wodurch die Position der Abtriebswelle an der Elektronikeinheit gemessen werden kann. Erfindungsgemäß sind zwischen Gehäuse und Abtriebswelle Lager angeordnet, so dass die Abtriebswelle vollständig über das Gehäuse gelagert ist. Querkräfte auf die Abtriebswelle können dadurch optimal durch die Strukturelemente des Gehäuses aufgenommen werden. Erfindungsgemäß sind zwischen Antriebswelle und Abtriebswelle Lager angeordnet, wodurch die Antriebswelle ausschließlich auf der Abtriebswelle gelagert ist. Es müssen dadurch keine genauen Fertigungstoleranzen eingehalten werden, da die Antriebswelle über die Abtriebswelle zentriert wird. Dadurch wird ein hohes Maß an Koaxialität der Antriebswelle zur Abtriebswelle erzielt, so dass auch eine Drehung beider Wellen koaxial zueinander ist. Es kann somit auf einfache Weise eine hohe Koaxialität zwischen Antriebswelle und Abtriebswelle erzielt werden, so dass der Verschleiß des Getriebes minimiert wird.

In einer bevorzugten Ausführung der Erfindung ist das Getriebe ein Planetengetriebe. Ein Planetengetriebe weist im Vergleich zu anderen Getriebearten eine kompakte Bauweise auf, so dass der Aktuator kleiner gebaut werden kann. Zudem sind mit einem Planetengetriebe hohe Untersetzungen zu erzielen und es wird ein hoher Drehmoment an der Abtriebswelle erzeugt. Durch die Achssymmetrie zwischen Antriebswelle und Abtriebswelle werden die Querkräfte minimiert, so dass die Wellen kleiner dimensioniert werden können.

In einer weiteren bevorzugten Ausführung der Erfindung ist die Antriebswelle über ein erstes Antriebswellenlager, welches am Antriebswellenaußenumfang anliegt und ein zweites Antriebswellenlager, welches am Antriebswelleninnenumfang anliegt, auf der Abtriebswelle gelagert. Durch eine solche Lagerung ist es auf einfache Weise möglich, die Abtriebswelle in der Antriebswelle anzuordnen und trotz alledem die Antriebswelle über die Abtriebswelle zu lagern.

Vorzugsweise ist ein erstes Abtriebswellenlager an einer radialen Außenseite eines das Abtriebszahnrad tragenden Verbindungsabschnitts angeordnet, und ein zweites Abtriebswellenlager ist an einer radialen Abtriebswellenaußenseite angeordnet. Die Abtriebswelle ist dadurch vollständig im Gehäuse gelagert.

In einer bevorzugten Ausgestaltung ist das erste Antriebswellenlager zumindest teilweise radial innerhalb eines axialen Erstreckungsabschnitts des ersten Abtriebswellenlagers angeordnet. Dadurch können die Kräfte der Antriebswelle ohne Biegebelastung der Abtriebswelle über das erste Abtriebswellenlager in das Gehäuse eingeleitet werden. Eine Belastung des Materials wird dadurch verringert, so dass die Abtriebswelle kleiner dimensioniert werden kann.

In einer bevorzugten Weiterbildung der Erfindung ist das zweite Abtriebswellenlager axial nebeneinanderliegend zu dem zweiten Antriebswellenlager angeordnet. Unter nebeneinanderliegend wird dabei verstanden, dass der axiale Abstand zwischen den Lagern lediglich so groß ist, dass beide Lager sich während des Betriebes nicht berühren. Der Abstand zwischen den beiden Lagern ist somit minimal, so dass eine Biegebelastung der Abtriebswelle vermieden wird. Kräfte von der Antriebswelle können somit direkt in das Gehäuse abgeleitet werden. Die Beanspruchung des Materials ist damit geringer, so dass die Abtriebswelle kleiner dimensioniert werden kann.

In einer vorteilhaften Ausführungsform ist die Elektronikeinheit an einem zum Abtriebszahnrad axial entgegengesetzten Ende der Abtriebswelle angeordnet und weist einen Positionssensor auf, wobei an einem der Elektronikeinheit zugewandten Ende der Abtriebswelle ein Sensormagnet angeordnet ist, welcher gegenüberliegend zum Positionssensor angeordnet ist. Die Elektronikeinheit ist somit an einem axialen Ende angeordnet, welches gegenüberliegend zur Abtriebsseite des Aktuators ist. Durch diese Anordnung der Elektronikeinheit kann eine Detektierung der Position der Abtriebswelle direkt über die gleiche Elektronikeinheit erfolgen, wie die Rotorpositionserfassung und die Ansteuerung der Stromversorgung des Elektromotors. Der Aktor ist dadurch einfacher und wirtschaftlicher herstellbar.

In einer bevorzugten Ausführung der Erfindung weist die Elektronikeinheit wenigstens einen Kommutierungssensor auf, welcher über ein magnetisch leitfähiges Element, das zwischen Kommutierungssensor und einem Rotor des Elektromotors angeordnet ist, das Magnetfeld des Rotors detektiert. Dadurch kann die Position des Rotors bestimmt werden, so dass der Stator dementsprechend kommutiert werden kann.

Vorzugsweise weist das Planetengetriebe zwei Getriebestufen auf, die mit der als Sonnenrad ausgebildeten Antriebswelle im Eingriff sind, wobei Planetenräder beider Getriebestufen zusammen an einem Planetenradträger gelagert sind, und wobei die Planetenräder der ersten Getriebestufe mit einem an einem Gehäuse des Aktuators ortsfest ausgebildeten Hohlrad im Eingriff sind und die Planetenräder der zweiten Getriebestufe mit dem an der Abtriebswelle angeordneten Abtriebszahnrad, welches als Abtriebswellenhohlrad ausgebildet ist, im Eingriff sind. Somit sind alle Planetenräder mit dem Hohlrad bzw. dem Abtriebswellenhohlrad und dem Sonnenrad in Kontakt. Dadurch werden die Planetenräder von dem Sonnenrad abgestützt, so dass eine geringe Radiallast an den Achsen der Planetenräder auftritt und das Drehmoment über mehrere Planetenräder übertragen wird. Dadurch wird ein guter Getriebewirkungsgrad erzielt und der Verschleiß minimiert. Die Komponenten des Planetengetriebes können dadurch kleiner dimensioniert werden, so dass der Aktuator wirtschaftlicher herstellbar ist.

In einer vorteilhaften Ausgestaltung ist die Verzahnung des Sonnenrades für beide Getriebestufen identisch, wobei sich eine Zähnezahl der Planetenräder und des Hohlrades der ersten Getriebestufe von einer Zähnezahl der Planetenräder und des Abtriebswellenhohlrades der zweiten Getriebestufe unterscheidet. Das Sonnenrad hat somit für beide Getriebestufen gleich viele Zähne. Die Zähne des Sonnenrades können sich somit über beide Getriebestufen erstrecken, so dass das Sonnenrad einfacher und damit wirtschaftlicher herstellbar ist und beide Planetenradsätze abgestützt werden.

Der Planetenradträger ist vorzugsweise zwischen den Getriebestufen angeordnet. Der Planetenradträger ist somit zwischen den Planetenrädern der ersten Getriebestufe und den Planetenräder der zweiten Getriebestufe angeordnet. Die Planetenräder beider Getriebestufe können so lediglich durch ein einziges Element gelagert werden, welches zwischen den Getriebestufen angeordnet ist. Dadurch benötigt das Planetengetriebe weniger Bauraum. Ein solcher Planetenradträger weist zudem einen einfachen Aufbau auf.

Besonders vorteilhaft ist es, wenn der Planetenradträger als Ring ausgebildet ist, welcher an den Getriebestufen zugewandten Seiten Achsen aufweist, auf denen die Planetenräder gelagert sind. Von den beiden Seitenflächen des Ringes ragen somit stiftförmige Elemente ab, welche die Achsen der Planetenräder bilden. Die Planetenräder werden somit lediglich durch die Achsen an dem Planetenradträger gelagert. Eine solche Lagerung ist einfach und wirtschaftlich herzustellen.

Es wird somit eine Aktuator für eine Verbrennungskraftmaschine geschaffen, welcher einfacher herstellbar ist und eine höhere Koaxialität der Antriebswelle zur Abtriebswelle aufweist, so dass der Verschleiß in dem Getriebe geringer ist.

Weitere Einzelheiten und Vorteile der vorliegenden Erfindung ergeben sich aus der nachfolgenden Beschreibung des Ausführungsbeispiels in Verbindung mit den Zeichnungen. In diesen zeigen:
- Figur 1:: Längsschnittdarstellung des erfindungsgemäßen Aktuators für eine Verbrennungskraftmaschine, und
- Figur 2:: Explosionszeichnung des Aktuators.

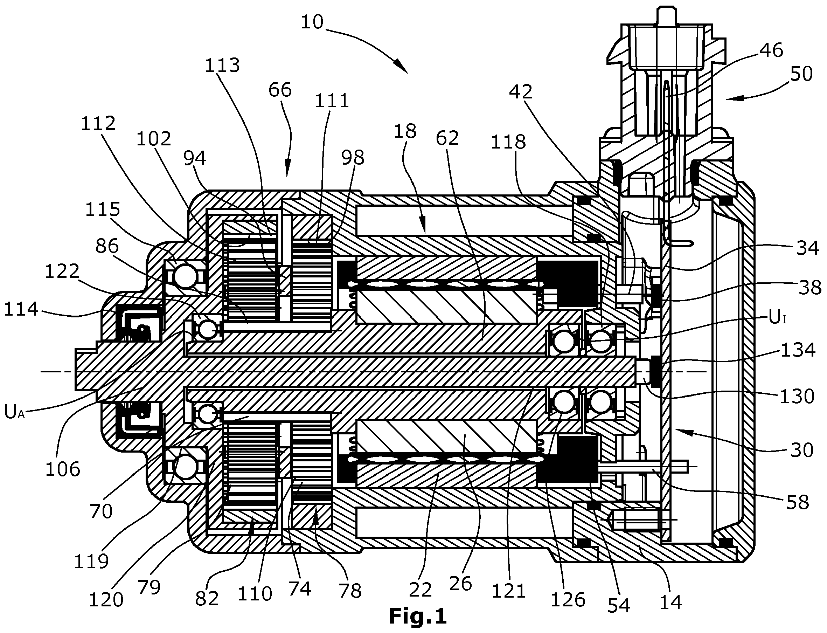

Die Figur 1 zeigt eine Längsschnittdarstellung des erfindungsgemäßen Aktuators 10 für eine Verbrennungskraftmaschine. Der Aktuator 10 umfasst ein mehrteiliges Gehäuse 14, innerhalb dessen ein als elektronisch kommutierter Gleichstrommotor ausgebildeter Elektromotor 18 angeordnet ist. Der Elektromotor 18 umfasst einen drehfest mit dem Gehäuse 14 verbundenen Stator 22, welcher einen mit Permanentmagneten ausgestatteten Rotor 26 antreibt.

An einem axialen Ende des Rotors 26 ist eine Elektronikeinheit 30 angeordnet, über welche der Stator 22 kommutiert wird. Die Elektronikeinheit 30 umfasst eine Platine 34, auf welcher Kommutierungssensoren 38 angeordnet sind, welche über magnetisch leitfähige Elemente 42, die zwischen Kommutierungssensor 38 und Rotor 26 angeordnet sind, das Magnetfeld des Rotors 26 und damit die Winkelposition von diesem detektieren. Die Platine 34 ist elektrisch über Kontakte 46 einer Steckerbuchse 50 kontaktiert. Zur Bestromung des Stators 22 ist eine Statorverschaltungseinheit 54 über Verbindungselementen 58 elektrisch mit der Platine 34 verbunden.

Der Rotor 26 ist fest mit einer als Hohlwelle ausgebildeten Antriebswelle 62 verbunden, so dass die Antriebswelle 62 mit dem Rotor 26 rotiert. An einem zur Elektronikeinheit 30 gegenüberliegenden axialen Ende des Rotors 26 ist als Getriebe ein zweistufiges Planetengetriebe 66 angeordnet, welches ein mit der Antriebswelle 62 verbundenes Sonnenrad 70, aufweist. Das Planetengetriebe 66 umfasst zusätzlich Planetenräder 74 einer ersten Getriebestufe 78 und Planetenräder 79 einer zweiten Getriebestufe 82, welche mit dem Sonnenrad 70 im Eingriff sind, so dass diese über das Sonnenrad 70 antreibbar sind. Eine Verzahnung 86 des Sonnenrades 70 ist dabei für beide Getriebestufen 78, 82 identisch.

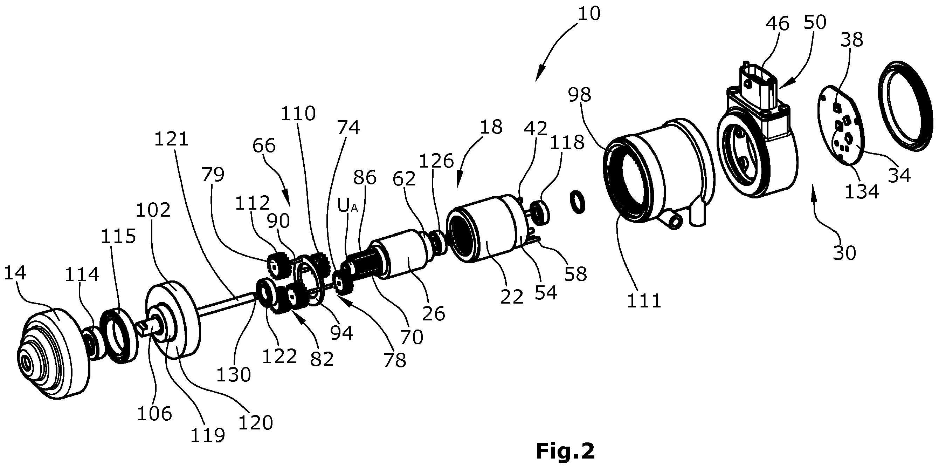

Die erste Getriebestufe 78 umfasst zwei Planetenräder 74, währenddessen die zweite Getriebestufe 82 drei Planetenräder 79 umfasst (siehe Figur 2). Die Planetenräder 74 der ersten Getriebestufe 78 und die Planetenräder 79 der zweiten Getriebestufe 82 sind auf Achsen 90 gelagert, welche sich von einem ringförmigen Planetenradträger 94, der zwischen den Getriebestufen 78, 82 angeordnet ist, axial erstrecken. Dadurch sind die Planetenräder 74 der ersten Getriebestufe 78 an dem Planetenradträger 94 relativ zu den Planetenrädern 79 der zweiten Getriebestufe 82 verdrehbar gelagert, während ihre Achsen 90 fest zueinander angeordnet sind.

Die Planetenräder 74 der ersten Getriebestufe 78 sind im Eingriff mit einem ortsfesten Hohlrad 98, welches im Gehäuse 14 befestigt ist. Die Planetenräder 79 der zweiten Getriebestufe 82 sind im Eingriff mit einem als Abtriebswellenhohlrad 102 ausgebildeten Abtriebszahnrad, welches an einer Abtriebswelle 106 befestigt ist. Eine Anzahl an Zähnen 110 der Planetenräder 74 und an Hohlradzähnen 111 der ersten Getriebestufe 78 unterscheidet sich dabei von einer Anzahl an Zähnen 112 der Planetenräder 79 und an Abtriebswellenhohlradzähnen 113 der zweiten Getriebestufe 82, so dass eine Untersetzung der Drehung der Antriebswelle 62 zur Drehung der Abtriebswelle 106 erzielt wird.

Ein zu der Elektronikeinheit 30 axial entgegengesetztes Ende der Abtriebswelle 106 ragt aus dem Gehäuse 14 heraus und wird über eine Dichtung 114 nach außen hin abgedichtet. Auf diesem Ende kann bspw. ein Klappenkörper angeordnet werden. Erfindungsgemäß ist die Abtriebswelle 106 über ein erstes Abtriebswellenlager 115 und ein zweites Abtriebswellenlager 118 in dem Gehäuse 14 gelagert. Das erste Abtriebswellenlager 115 ist dabei an einer radialen Außenseite 119 eines das Abtriebswellenhohlrad 102 tragenden Verbindungsabschnitts 120 angeordnet, währenddessen das zweite Abtriebswellenlager 118 an einer radialen Abtriebswellenaußenseite 121 an einem axialen Ende des Teils der Abtriebswelle 106 angeordnet ist, welches sich in Richtung der Elektronikeinheit 30 durch die als Hohlwelle ausgebildete Antriebswelle 62 erstreckt.

Erfindungsgemäß ist die Antriebswelle 62 über ein erstes Antriebswellenlager 122, welches zumindest teilweise innerhalb eines axialen Erstreckungsabschnitts des ersten Abtriebswellenlagers 115, radial innenliegend zu dem ersten Abtriebswellenlager 115 zwischen einem Antriebswellenaußenumfang U_{A} und dem Verbindungsabschnitt 120 des Abtriebswellenhohlrades 102 angeordnet ist, und einem zweiten Antriebswellenlager 126, welches axial gegenüberliegend zu dem zweiten Abtriebswellenlager 118 zwischen einem Antriebswelleninnenumfang U_{I} und der Abtriebswelle 106 angeordnet ist, gelagert. Dadurch wird eine hohe Koaxialität zwischen Abtriebswelle 106 und Antriebswelle 62 erzielt. An einem zur Elektronikeinheit 30 weisenden Ende der Abtriebswelle 106 ist ein Sensormagnet 130 angeordnet, welcher mit einem auf der Platine 34 angeordneten Positionssensor 134 zusammenwirkt, so dass eine Winkelposition der Abtriebswelle 106 detektierbar ist.

Der beschriebene erfindungsgemäße Aktuator weist somit eine hohe Koaxialität der Antriebswelle zur Abtriebswelle auf, so dass der Verschleiß minimiert wird. Zudem wird diese Koaxialität durch einen geringen Fertigungsaufwand erzielt, so dass der Aktuator einfacher und dadurch auch wirtschaftlicher herstellbar ist.

Es sollte deutlich sein, dass der Schutzbereich nicht auf das beschriebene Ausführungsbeispiel eines Aktuators beschränkt ist, sondern verschiedene Modifikationen und konstruktive Änderungen denkbar sind. Beispielsweise ist das Planetengetriebe nicht auf die gezeigte Anzahl an Planetenrädern beschränkt, so dass auch eine dazu verschiedene Anzahl an Planetenrädern verwendbar ist. Auch kann sich die Zähnezahl des Sonnenrades zwischen erster Getriebestufe und zweiter Getriebestufe ändern.

### Bezugszeichenliste

- 10: Aktuator
- 14: Gehäuse
- 18: Elektromotor
- 22: Stator
- 26: Rotor
- 30: Elektronikeinheit
- 34: Platine
- 38: Kommutierungssensor
- 42: magnetisch leitfähiges Element
- 46: Kontakte
- 50: Steckerbuchse
- 54: Statorverschaltungseinheit
- 58: Verbindungselement
- 62: Antriebswelle
- 66: Planetengetriebe
- 70: Sonnenrad
- 74: Planetenrad erste Getriebestufe
- 78: erste Getriebestufe
- 79: Planetenrad zweite Getriebestufe
- 82: zweite Getriebestufe
- 86: Verzahnung
- 90: Achse
- 94: Planetenradträger
- 98: Hohlrad
- 102: Abtriebswellenhohlrad
- 106: Abtriebswelle
- 110: Zähne Planetenrad erste Getriebestufe
- 111: Hohlradzähne
- 112: Zähne Planetenrad zweite Getriebestufe
- 113: Abtriebswellenhohlradzähne
- 114: Dichtung
- 115: erstes Abtriebswellenlager
- 118: zweites Abtriebswellenlager
- 119: radiale Außenseite
- 120: Verbindungsabschnitt
- 121: radiale Abtriebswellenaußenseite
- 122: erstes Antriebswellenlager
- 126: zweites Antriebswellenlager
- 130: Sensormagnet
- 134: Positionssensor
- U_{A}: Antriebswellenaußenumfang
- U_{I}: Antriebswelleninnenumfang

## Patentansprüche

1. Aktuator (10) zur Verstellung von Klappen für eine Verbrennungskraftmaschine mit:
- einem Elektromotor (18), welcher eine Antriebswelle (62) antreibt,
- einer Elektronikeinheit (30), und
- einem Getriebe (66) mit einem koaxial zur Antriebswelle (62) angeordneten Abtriebszahnrad (102), wobei das Getriebe (66) die Antriebswelle (62) mit einer Abtriebswelle (106) des Aktuators (10) verbindet,
wobei die Antriebswelle (62) als Hohlwelle ausgebildet ist, in welcher die Abtriebswelle (106) angeordnet ist,
**dadurch gekennzeichnet, dass**
zwischen einem Gehäuse (14) und der Abtriebswelle (106) Abtriebswellenlager (115, 118) angeordnet sind, so dass die Abtriebswelle (106) vollständig über das Gehäuse (14) des Aktuators (10) gelagert ist und zwischen der Antriebswelle (62) und der Abtriebswelle (106) Antriebswellenlager (122, 126) angeordnet sind, wodurch die Antriebswelle (62) ausschließlich auf der Abtriebswelle (106) gelagert ist.

2. Aktuator (10) zur Verstellung von Klappen für eine Verbrennungskraftmaschine nach Anspruch 1, **dadurch gekennzeichnet, dass** das Getriebe ein Planetengetriebe (66) ist.

3. Aktuator (10) zur Verstellung von Klappen für eine Verbrennungskraftmaschine nach Anspruch 1 oder 2, **dadurch gekennzeichnet, dass** die Antriebswelle (62) über ein erstes Antriebswellenlager (122), welches am Antriebswellenaußenumfang (U_{A}) anliegt und ein zweites Antriebswellenlager (126), welches am Antriebswelleninnenumfang (U_{I}) anliegt, auf der Abtriebswelle (106) gelagert ist.

4. Aktuator (10) zur Verstellung von Klappen für eine Verbrennungskraftmaschine nach einem der vorherigen Ansprüche, **dadurch gekennzeichnet, dass** ein erstes Abtriebswellenlager (115) an einer radialen Außenseite (119) eines das Abtriebszahnrad (102) tragenden Verbindungsabschnitts (120) angeordnet ist, und dass ein zweites Abtriebswellenlager (118) an einer radialen Abtriebswellenaußenseite (121) angeordnet ist.

5. Aktuator (10) zur Verstellung von Klappen für eine Verbrennungskraftmaschine nach Anspruch 4, **dadurch gekennzeichnet, dass** das erste Antriebswellenlager (122) zumindest teilweise radial innerhalb eines axialen Erstreckungsabschnitts des ersten Abtriebswellenlagers (115) angeordnet ist.

6. Aktuator (10) zur Verstellung von Klappen für eine Verbrennungskraftmaschine nach Anspruch 4 oder 5, **dadurch gekennzeichnet, dass** das zweite Abtriebswellenlager (118) axial nebeneinanderliegend zu dem zweiten Antriebswellenlager (126) angeordnet ist.

7. Aktuator (10) zur Verstellung von Klappen für eine Verbrennungskraftmaschine nach einem der vorherigen Ansprüche, **dadurch gekennzeichnet, dass** die Elektronikeinheit (30) an einem zum Abtriebszahnrad (102) axial entgegengesetzten Ende der Abtriebswelle (106) angeordnet ist und einen Positionssensor (134) aufweist, wobei an einem der Elektronikeinheit (30) zugewandten Ende der Abtriebswelle (106) ein Sensormagnet (130) angeordnet ist, welcher gegenüberliegend zum Positionssensor (134) angeordnet ist.

8. Aktuator (10) zur Verstellung von Klappen für eine Verbrennungskraftmaschine nach einem der vorherigen Ansprüche, **dadurch gekennzeichnet, dass** die Elektronikeinheit (30) wenigstens einen Kommutierungssensor (38) aufweist, welcher über ein magnetisch leitfähiges Element (42), das zwischen Kommutierungssensor (38) und einem Rotor (26) des Elektromotors (18) angeordnet ist, das Magnetfeld des Rotors (26) detektiert.

9. Aktuator (10) zur Verstellung von Klappen für eine Verbrennungskraftmaschine nach einem der vorherigen Ansprüche, **dadurch gekennzeichnet, dass** das Planetengetriebe (66) zwei Getriebestufen (78, 82) aufweist, die mit der als Sonnenrad (70) ausgebildeten Antriebswelle (62) im Eingriff sind, wobei Planetenräder (74, 79) beider Getriebestufen (78, 82) zusammen an einem Planetenradträger (94) gelagert sind, und wobei die Planetenräder (74) der ersten Getriebestufe (78) mit einem an einem Gehäuse (14) des Aktuators (10) ortsfest ausgebildeten Hohlrad (98) im Eingriff sind und die Planetenräder (79) der zweiten Getriebestufe (82) mit dem an der Abtriebswelle (106) angeordneten Abtriebszahnrad (102), welches als Abtriebswellenhohlrad (102) ausgebildet ist, im Eingriff sind.

10. Aktuator (10) zur Verstellung von Klappen für eine Verbrennungskraftmaschine nach Anspruch 9, **dadurch gekennzeichnet, dass** die Verzahnung (86) des Sonnenrades (70) für beide Getriebestufen (78, 82) identisch ist, wobei sich eine Zähnezahl der Planetenräder (74) und des Hohlrades (98) der ersten Getriebestufe (78) von einer Zähnezahl der Planetenräder (79) und des Abtriebswellenhohlrades (102) der zweiten Getriebestufe (82) unterscheidet.

11. Aktuator (10) zur Verstellung von Klappen für eine Verbrennungskraftmaschine nach einem der Ansprüche 9 oder 10, **dadurch gekennzeichnet, dass** der Planetenradträger (94) zwischen den Getriebestufen (78, 82) angeordnet ist.

12. Aktuator (10) zur Verstellung von Klappen für eine Verbrennungskraftmaschine nach einem der Ansprüche 9 bis 11, **dadurch gekennzeichnet, dass** der Planetenradträger (94) als Ring ausgebildet ist, welcher an den den Getriebestufen (78, 82) zugewandten Seiten Achsen (90) aufweist, auf denen die Planetenräder (74, 79) gelagert sind.

## Claims

1. Actuator (10) for adjusting flaps for an internal combustion engine comprising:
- an electric motor (18) driving an input shaft (62),
- an electronic unit (30), and
- a transmission (66) with an output gear (102) coaxially arranged to the input shaft (62), wherein the transmission (66) connects the input shaft (62) to an output shaft (106) of the actuator (10),
wherein the input shaft (62) is configured as a hollow shaft in which the output shaft (106) is arranged,
**characterized in that**
output shaft bearings (115, 118) are arranged between the housing (14) and the output shaft (106) in such a way that the output shaft (106) is pivoted entirely via the housing (14) of the actuator (10) and that input shaft bearings (122, 126) are arranged between the input shaft (62) and the output shaft (106), whereby the input shaft (62) is mounted exclusively on the output shaft (106).

2. Actuator (10) for adjusting flaps for an internal combustion engine according to claim 1, **characterized in that** the transmission is a planetary transmission (66).

3. Actuator (10) for adjusting flaps for an internal combustion engine according to claim 1 or 2, **characterized in that** the input shaft (62) is mounted on the output shaft (106) via a first input shaft bearing (122) resting against the outer circumference of an input shaft (U_{A}) and a second input shaft bearing (126) resting against the inner circumference of an input shaft (U_{I}).

4. Actuator (10) for adjusting flaps for an internal combustion engine according to any one of the preceding claims, **characterized in that** a first output shaft bearing (115) is arranged at a radial outer face (119) of a connecting portion (120) supporting the output gear (102), and **in that** a second output shaft bearing (118) is arranged at a radial outer face of the output shaft (121).

5. Actuator (10) for adjusting flaps for an internal combustion engine according to claim 4, **characterized in that** the first input shaft bearing (122) is arranged at least partially radially within an axial extension portion of the first output shaft bearing (115).

6. Actuator (10) for adjusting flaps for an internal combustion engine according to claim 4 or 5, **characterized in that** the second output shaft bearing (118) is arranged axially adjacent with respect to the second input shaft bearing (126).

7. Actuator (10) for adjusting flaps for an internal combustion engine according to any one of the preceding claims, **characterized in that** the electronic unit (30) is arranged at an end of the output shaft (106) axially opposite to the output gear (102) and comprises a position sensor (134), wherein a sensor magnet (130) is arranged at an end of the output shaft (106) facing the electronic unit (30) and is arranged so as to face the position sensor (134).

8. Actuator (10) for adjusting flaps for an internal combustion engine according to any one of the preceding claims, **characterized in that** the electronic unit (30) comprises at least one commutation sensor (38) which detects the magnetic field of a rotor (26) via a magnetically conductive element (42) arranged between the commutation sensor (38) and the rotor (26).

9. Actuator (10) for adjusting flaps for an internal combustion engine according to any one of the preceding claims, **characterized in that** the planetary transmission (66) comprises two transmission stages (78, 82) engaging with the input shaft (62) designed as a sun gear (70), wherein planetary gears (74, 79) of both transmission stages (78, 82) are mounted together at a planetary gear carrier (94), and wherein the planetary gears (74) of the first transmission stage (78) engage with a ring gear (98) which is stationary formed at a housing (14) of the actuator (10), and the planetary gears (79) of the second transmission stage (82) engage with the output gear (102) arranged at the output shaft (106) and adapted as an output shaft ring gear (102).

10. Actuator (10) for adjusting flaps for an internal combustion engine according to claim 9, **characterized in that** the toothing (86) of the sun gear (70) is identical for both transmission stages (78, 82), wherein a number of teeth of the planetary gears (74) and of the ring gear (98) of the first transmission stage (78) differs from a number of teeth of the planetary gears (79) and the output shaft ring gear (102) of the second transmission stage (82).

11. Actuator (10) for adjusting flaps for an internal combustion engine according to any one of the claims 9 or 10, **characterized in that** the planetary gear carrier (94) is arranged between the transmission stages (78, 82).

12. Actuator (10) for adjusting flaps for an internal combustion engine according to any one of the claims 9 to 11, **characterized in that** the planetary gear carrier (94) is designed as a ring comprising axles (90) on the sides facing the transmission stages (78, 82), on which the planetary gears (74, 79) are mounted.

## Revendications

1. Actionneur (10) pour actionner des volets pour un moteur à combustion interne, avec:
- un moteur électrique (18) entrainant un arbre d'entraînement (62),
- une unité électronique (30), et
- un engrenage (66) avec une roue dentée menée (102) disposée coaxialement par rapport à l'arbre d'entrainement (62), l'engrenage (66) reliant l'arbre d'entrainement (62) avec un arbre de sortie (106) dudit actionneur (10),
dans lequel l'arbre d'entrainement (62) est conçu comme arbre creux, dans lequel l'arbre de sortie (106) est disposé,
**caractérisé en ce que**
des paliers (115, 118) de l'arbre de sortie sont disposés entre un carter (14) et l'arbre de sortie (106), de sorte que l'arbre de sortie (106) soit entièrement supporté par le carter (14) dudit actionneur (10) et des paliers (122, 126) de l'arbre d'entrainement soient disposés entre l'arbre d'entrainement (62) et l'arbre de sortie (106), ce par quoi l'arbre d'entrainement (62) est supporté exclusivement sur l'arbre de sortie (106).

2. Actionneur (10) pour actionner des volets pour un moteur à combustion interne selon la revendication 1, **caractérisé en ce que** l'engrenage est un engrenage planétaire (66).

3. Actionneur (10) pour actionner des volets pour un moteur à combustion interne selon la revendication 1 ou 2, **caractérisé en ce que** l'arbre d'entrainement (62) est supporté sur l'arbre de sortie (106) par un premier palier (122) de l'arbre d'entrainement en contact avec la circonférence extérieure (U_{A}) de l'arbre d'entrainement, et un deuxième palier (126) de l'arbre d'entrainement en contact avec la circonférence intérieure (U_{I}) de l'arbre de sortie (106).

4. Actionneur (10) pour actionner des volets pour un moteur à combustion interne selon l'une quelconque des revendications précédentes, **caractérisé en ce qu'**un premier palier (115) de l'arbre de sortie est disposé sur un côté extérieur radial (119) d'une section de liaison (120) portant la roue dentée menée (102), et qu'un deuxième palier (118) de l'arbre de sortie est disposé sur un côté extérieure radial (121) de l'arbre de sortie.

5. Actionneur (10) pour actionner des volets pour un moteur à combustion interne selon la revendication 4, **caractérisé en ce que** le premier palier (122) de l'arbre d'entrainement est disposé au moins en partie au sein d'une section de l'étendue du premier palier (115) de l'arbre de sortie.

6. Actionneur (10) pour actionner des volets pour un moteur à combustion interne selon la revendication 4 ou 5, **caractérisé en ce que** le deuxième palier (118) de l'arbre de sortie est disposé axialement à côté du deuxième palier (126) de l'arbre d'entrainement.

7. Actionneur (10) pour actionner des volets pour un moteur à combustion interne selon l'une quelconque des revendications précédentes, **caractérisé en ce que** l'unité électronique (30) est disposée à une extrémité de l'arbre de sortie (106) axialement opposée à la roue dentée menée (102) et comprend un capteur de position (134), un aimant de capteur (130) étant disposé à une extrémité de l'arbre de sortie (106) tournée vers l'unité électronique (30), ledit aimant étant disposé de manière opposée au capteur de position (134).

8. Actionneur (10) pour actionner des volets pour un moteur à combustion interne selon l'une quelconque des revendications précédentes, **caractérisé en ce que** l'unité électronique (30) comprend au moins un capteur de commutation (38) détectant le champ magnétique d'un rotor (26) par un élément (42) magnétiquement conducteur qui est disposé entre le capteur de commutation (38) et un rotor (26) du moteur électrique (18).

9. Actionneur (10) pour actionner des volets pour un moteur à combustion interne selon l'une quelconque des revendications précédentes, **caractérisé en ce que** l'engrenage planétaire (66) comprend deux étages d'engrenage (78, 82) en prise avec l'arbre d'entrainement (62) conçu comme roue solaire (70), des roues planétaires (74, 79) des deux étages d'engrenage (78, 82) étant supportés ensemble sur un support de roue planétaires (94), et les roues planétaires (74) du premier étage d'engrenage (78) étant en prise avec une couronne (98) formée de manière stationnaire sur un carter (14) de l'actionneur (10), et les roues planétaires (79) de la deuxième étage d'engrenage (82) étant en prise avec la roue dentée menée (102) conçue comme couronne (102) de l'arbre de sortie et disposée sur l'arbre de sortie (106).

10. Actionneur (10) pour actionner des volets pour un moteur à combustion interne selon la revendication 9, **caractérisé en ce que** la denture (86) de la roue solaire (70) est identique pour les deux étages d'engrenage (78, 82), le nombre de dents des roues planétaires (74) et de la couronne (98) du premier étage d'engrenage (78) étant différent du nombre de dents des roues planétaires (79) et de la couronne (102) de l'arbre de sortie du deuxième étage d'engrenage (82).

11. Actionneur (10) pour actionner des volets pour un moteur à combustion interne selon la revendication 9 ou 10, **caractérisé en ce que** le support des roues planétaires (94) est disposé entre les étages d'engrenage (78, 82).

12. Actionneur (10) pour actionner des volets pour un moteur à combustion interne selon l'une quelconque des revendications 9 à 11, **caractérisé en ce que** e support des roues planétaires (94) est conçu comme anneau avec des axes (90) aux côtés tournés vers les étages d'engrenage (78, 82), sur lesquels axes les roues planétaires (74, 79) sont supportées.
